# EUROPEAN PATENT APPLICATION

(11) **EP 0 766 274 A2**
(43) Date of publication of application: **02.04.1997**
(21) Application number: 96202689.4
(22) Date of filing: 26.09.1996
(51) Int. Cl.: H01F 27/32, H01F 27/02, H01F 27/36

(54) **Transformer structure**

(30) Priority: 28.09.1995 JP 277015/95
(71) Applicant: Yamamoto, Makoto, Nagano (JP)
(72) Inventor: Yamamoto, Makoto, Nagano (JP)
(74) Representative: Falcetti, Carlo

(57) **Abstract**

Disclosed is a transformer structure which is of a blocked transformer (Tr1) formed by coating coils (10,16) in a power distribution transformer (Tr1) with an insulating molding material (12,18) to a predetermined thickness; wherein a housing (26) made of an insulating material lined with a metallic shielding member (24) is disposed to surround the outermost layer portion of said insulating molding material (18), said shielding member (24) being grounded. The transformer structure may be integrated with coils (10,16) of a current transformer (CT) and of a potential transformer (PT) and molded together with the coils (10,16) of the power distribution transformer (Tr1) so as to electrically connect these coils to one another based on the principle of electromagnetic induction. The insulating material (12,18) may contain a metallic shielding member (24), which is to be grounded, disposed to surround the outermost coil (16) of the transformer. Open ends of the housing (26) are closed with cylindrical members having lids applied to the outer ends thereof.

## Description

### BACKGROUND OF THE INVENTION

### Field of the Invention

This invention relates to a transformer structure which can prevent, when a power distribution transformer having coils thereof coated with an insulating molding material is disposed, for example, in a cubicle, workers from accidentally receiving electrical shocks in the cubicle.

### Description of the Related Art

In a cubicle installed in an electric power substation and the like are disposed in a predetermined arrangement power distribution transformers, as major elements, and current transformers for current measurement, potential transformers for voltage measurement, breakers, etc., and these apparatuses are adapted to be connected to one another by cables. As such transformer is known a dry type molded transformer, in which coils thereof are coated with an insulating molding material such as a synthetic resin for protecting them against deterioration and insulation.

In the molded transformer, leakage of magnetic flux to the outside cannot be avoided even if the transformer is coated with the insulating molding material, and accidents that workers inadvertently touch the transformer to receive electrical shocks attributed to such leakage of magnetic flux in an operation of cleaning or maintenance and inspection in the cubicle. In this transformer, primary terminal led out of a primary coil and secondary terminal led out of a secondary coil are exposed to the outside of the transformer, and a high-voltage cable and a low-voltage cable are connected to the primary terminal and to the secondary terminal respectively. Further, since the current transformer, potential transformer, etc. are disposed in the cubicle as separate units independent of the power distribution transformer as described above, junctions of these units with the cables are exposed. In this case, if workers step into the cubicle for the purpose of cleaning or of maintenance and inspection of each apparatus, accidents are liable to occur that workers inadvertently touch the exposed high-voltage portions to receive electrical shocks, imposing on them extremely dangerous operations.

Incidentally, it often happens that insects, rats, etc. enter the cubicle to give rise to problems that they touch the exposed high-voltage portions to be sacrificed by electricity and deteriorate or damage the current transformer or potential transformer. More specifically, no sufficient countermeasure is taken against the electrical accidents that workers receive electrical shocks and that rats etc. are sacrificed by electricity in the conventional cubicle, and, for example, the accidents that workers receive electrical shocks amount to some hundred cases per year. Accordingly, a proposal which can solve this problem has been waited for.

### SUMMARY OF THE INVENTION

In view of the disadvantages inherent in the prior art described above, this invention is proposed so as to solve them successfully, and it is an objective of this invention to provide a novel transformer structure which can prevent such electrical accidents, for example, in a cubicle in which the transformer is installed from occurring.

In order to attain the intended objective, the transformer structure according to this invention is of a blocked transformer formed by coating coils in a power distribution transformer with an insulating molding material, for example, a synthetic resin such as epoxy or a synthetic rubber such as butyl rubber to a predetermined thickness, characterized in that a housing made of an insulating material lined with a metallic shielding member is disposed to surround the outermost layer portion of the insulating molding material, and that the shielding member is grounded.

In order to attain the intended objective, the transformer structure according to another aspect of this invention is of an integrated transformer serving as a power receiving and transforming equipment formed by disposing coils of a current transformer and of a potential transformer adjacent to coils of a power distribution transformer to be electrically connected to one another based on the principle of electromagnetic induction and by charging an insulating molding material, for example, a synthetic resin such as epoxy or a synthetic rubber such as butyl rubber around the coils in the distribution transformer and those of the current transformer and of the potential transformer to integrate these coils into one block, characterized in that a housing made of an insulating material lined with a metallic shielding member is disposed to surround the outermost layer portion of the insulating molding material and that the shielding member being grounded.

In order to attain the intended objective, the transformer structure according to still another aspect of this invention is of a blocked transformer formed by coating coils in a power distribution transformer with an insulating molding material, for example, a synthetic resin such as epoxy or a synthetic rubber such as butyl rubber to a predetermined thickness, characterized in that a metallic shielding member is disposed to surround the outermost coil in the outer layer portion of the insulating molding material present around the coil, and that the shielding member being grounded.

In order to attain the intended objective, the transformer structure according to still another aspect of this invention is of an integrated transformer serving as a power receiving and transforming equipment formed by disposing coils of a current transformer and of a potential transformer adjacent to coils of a power distribution transformer to be electrically connected to one another based on the principle of electromagnetic induction and by charging an insulating molding material, for example, a synthetic resin such as epoxy or a synthetic rubber such as butyl rubber around the coils in the distribution transformer and those of the current transformer and of the potential transformer to integrate these coils into one block, characterized in that a metallic shielding member is disposed to surround the outermost coil in the outer layer portion of the insulating molding material present around the coil, the shielding member being grounded.

### BRIEF DESCRIPTION OF THE DRAWINGS

Fig. 1 is a schematic constitutional view of a transformer to which the transformer structure according to a first embodiment of this invention is applied;
Fig. 2 is a schematic constitutional view of a transformer to which the transformer structure according to a second embodiment of this invention is applied;
Fig. 3 is a schematic constitutional view of a transformer to which the transformer structure according to a third embodiment of this invention is applied;
Fig. 4 is a schematic constitutional view of a transformer to which the transformer structure according to a fourth embodiment of this invention is applied;
Fig. 5 is a schematic constitutional view of a transformer to which the transformer structure according to a fifth embodiment of this invention is applied;
Fig. 6 is a schematic constitutional view of a transformer to which the transformer structure according to a sixth embodiment of this invention is applied;
Fig. 7 is a schematic constitutional view of a transformer to which the transformer structure according to a seventh embodiment of this invention is applied; and
Fig. 8 is an explanatory drawing showing an electric energy transforming equipment employing transformers according to one embodiment of this invention.

### DETAILED DESCRIPTION OF THE PREFERRED EMBODIMENTS

Next, the transformer structure according to this invention will be described by way of preferred embodiments referring to the attached drawings.

### (First embodiment)

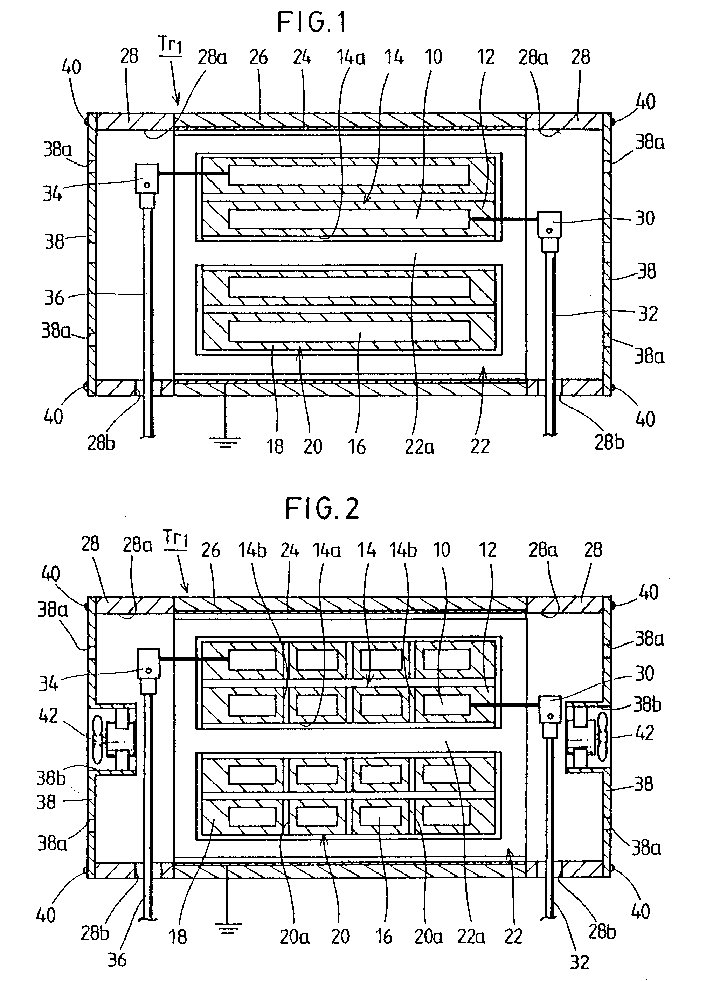

Fig. 1 shows a schematic constitutional view of a transformer to which the transformer structure according to a first embodiment of this invention is applied. A power distribution transformer Tr1 basically consists of a first cylindrical body 14 obtained by coating a primary coil 10 with an insulating molding material 12 to a predetermined thickness to form a cylindrical block, a second cylindrical body 20 obtained by coating a secondary coil 16 with an insulating molding material 18 to a predetermined thickness to form a cylindrical block, which is disposed concentrically around the first cylindrical body 14, and a three leg core 22 having a center leg 22a thereof being inserted to a center bore 14a of the first cylindrical body 14. As the insulating molding materials 12,18, synthetic resins such as epoxy and polyester or synthetic rubbers such as butyl rubber and ethylene propylene rubber can be suitably employed.

A cylindrical housing 26 is disposed around the three leg core 22 to envelope the cylindrical bodies 14,20 and the core 22 entirely and concentrically. The inner circumference of the housing 26 is lined with a metallic shielding member 24 such as of iron and aluminum, and the shielding member 24 is grounded when the transformer Tr1 is installed, for example, in a cubicle (not shown), so that the magnetic flux leaking through the insulating molding materials 12,18 may be prevented by the shielding member 24 from leaking to the outside of the housing 26. Further, the housing 26 is made of the same insulating material as the insulating molding materials 12,18 constituting the first cylindrical body 14 and the second cylindrical body 20, and there is absolutely no fear that operators receive electrical shocks if they touch it.

A cylindrical member 28 is attached to each axial end of the housing 26. The cylindrical members 28 are made of the same insulating material as described above and each have a through hole 28b opening radially at the bottom. A primary terminal 30 led out of the primary coil 10 is located in a center bore 28a of one cylindrical member 28 (right cylindrical member in Fig. 1), and a high-voltage cable 32 introduced through the bottom through hole 28b is adapted to be connected to this primary terminal 30. Meanwhile, a secondary terminal 34 led out of the secondary coil 16 is located in a center bore 28a of the other cylindrical member 28 (left cylindrical member in Fig. 1), and a low-voltage cable 36 introduced through the bottom through hole 28b is connected to this secondary terminal 34. Further, a lid 38 is detachably attached to the outer open end of each cylindrical member 28 by a plurality of screws 40, so that the junctions of the terminals 30, 34 with the cables 32,36 may not be exposed to the outside of the transformer Tr1. Incidentally, a plurality of through holes 38a are defined in each lid 38 in a predetermined pattern, so that the transformer Tr1 may be air-cooled by distributing the outside air into it through the through holes 38a and thus rise in the temperature of the transformer Tr1 may be controlled.

### (Action of the first embodiment)

Next, action of the transformer structure according to the first embodiment will be described. When the thus constituted transformer Tr1 is to be installed in a cubicle, the shielding member 24 applied to the housing 26 as a lining is grounded. Further, in the state where the lids 38 fastened with screws to the cylindrical members 28 respectively are detached therefrom, operations of connecting the primary terminal 30 and the secondary terminal 34 with the high-voltage cable 32 and the low-voltage cable 36 introduced to the inside through the floor of the cubicle and the through holes 28b defined at the bottoms of the cylindrical members 28 are performed from the open end sides of the transformer Tr1, respectively. After completion of the connecting operations, the lids 38 are fastened with the screws to the cylindrical members 28 respectively.

The magnetic flux leaking from the first cylindrical body 14 and the second cylindrical body 20 in the transformer Tr1 is shielded by the shielding member 24 of the housing 26 disposed to surround the three leg core 22 to thoroughly prevent the magnetic flux from leaking to the outside of the housing 26. Meanwhile, the junction of the primary terminal 30 led out of the primary coil 10 of the transformer Tr1 with the high-voltage cable 32 and the junction of the secondary terminal 34 led out of the secondary coil 16 with the low-voltage cable 36 are designed not to be exposed to the outside of the transformer Tr1. Besides, these junctions are protected by the lids 38 so that they may not be touched. Accordingly, when workers step into the cubicle to perform cleaning or maintenance and inspection, accidents that they touch the connecting portions to receive electrical shocks can be prevented from occurring.

Incidentally, if a transparent window-like portion is provided in each lid 38, the workers can inspect the junctions through them. If a current transformer CT and a potential transformer PT to be connected to the power distribution transformer Tr1 are disposed in the cylindrical members 28, the junctions of the current transformer CT and of the potential transformer PT with the transformer Tr1 can be allowed not to be exposed to the outside. Further, if a vibration-proofing material or a sound-proofing material is applied around the first cylindrical body 14 and the second cylindrical body 20, vibration of the transformer Tr1 or generation of noises can be controlled.

### (Second embodiment)

Fig. 2 shows a schematic constitution of a transformer to which the transformer structure according to a second embodiment of this invention is applied. Since the basic constitution of this transformer is the same as that of the first embodiment, only different parts will be described. That is, a plurality of radially opening vents 14b,20a are defined in the insulating molding material 12 of the first cylindrical body 14 and in the insulating molding material 18 of the second cylindrical body 20 in the transformer Tr1 in a predetermined pattern. A blowing hole 38b is defined at the center of the each lid 38 attached to each cylindrical member 28, and an air blower 42 such as a sirocco fan is attached to the inner surface of the lid 38 so as to oppose the blowing hole 38b (to be located in the center bore 28a of the cylindrical member 28). One air blower 42 is designed to blow the outside air sucked through one blowing hole 38b into the cylindrical member 38; whereas the other air blower 42 is designed to blow the inside air in the cylindrical member 38 to the outside through the other blowing hole 38b. More specifically, by driving the air blowers 42, the transformer Tr1 can be air-cooled by distributing forcibly the outside through the blowing holes 14b,20a of the cylindrical bodies 14,20, and thus rise in the temperature of the transformer Tr1 can be controlled to prevent drop in the output and reduction in the life from occurring.

Incidentally, in the second embodiment, the inside of the transformer Tr1 can be air-cooled forcibly if the air blower 42 is attached to one lid 38 only. Further, the inside of the transformer can be also air-cooled forcibly by forming a plurality of vents opening radially outward in the shielding member 24 and the housing 26 and by blowing the outside air sucked by the air blowers 42 through the blowing holes 38b into the cylindrical members 28.

### (Third embodiment)

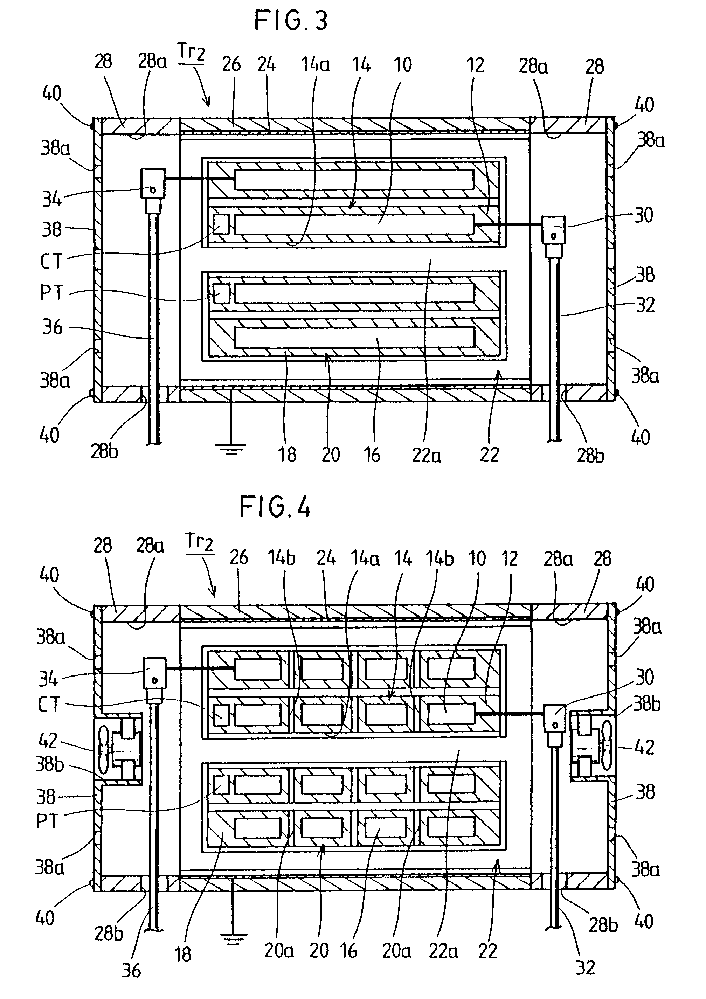

Fig. 3 shows the schematic constitutional view of a transformer to which the transformer structure according to a third embodiment of this invention is applied. Since the basic constitution of this transformer is the same as that of the first embodiment, only different parts will be described. That is, in the transformer Tr2 of the third embodiment, coils of a current transformer CT and coils of a potential transformer PT are disposed adjacent to the primary coil 10 of the transformer Tr2 and in no contact therewith, and these coils are electrically connected to one another based on the principle of electromagnetic induction. An insulating molding material 12 is charged around the primary coil 10 and the coils of the current transformer CT and of the potential transformer PT to integrate them into one block and constitute a first cylindrical body 14. More specifically, the coils of the current transformer CT and of the potential transformer PT are integrally molded with the insulating molding material 12 so that high-voltage portions may not be exposed to the outside. The thus constituted transformer Tr2 according to this embodiment is referred to as an integrated transformer serving as a power receiving and transforming equipment having functions of a power receiving and transforming equipment integrated with a current transformer CT and a potential transformer PT.

As the current transformer CT and the potential transformer PT to be connected to the primary coils 10 of the transformer Tr2, those of digital type are employed, and electric current is designed to be measured by an ammeter (not shown) in the state where the coils of the current transformer CT are disposed in no contact with each coil in the primary coil 10. With respect to the potential transformer PT, voltage is designed to be measured by a voltmeter (not shown) in the state where the coils of the potential transformers PT are disposed in no contact with each coil in the primary coil 10. Since the voltage to be applied to one coil in the primary coils 10 is very small, the current flowing across the current transformer CT and the potential transformer PT can be minimized (e.g., to 0.1 mA to 0.01 mA) by disposing the coils of the current transformer CT and of the potential transformer PT in no contact with the coil 10 and with extremely small distances between them. Thus, generation of heat can be minimized to improve safety and achieve cost reduction. Incidentally, the ammeters and the voltmeters can be integrated into the housing 26. Further, the current transformer CT and potential transformer PT may be connected to the secondary coil 16 of the transformer Tr2 according to the same constitution as described above.

More specifically, in the transformer Tr2 according to the third embodiment, the high-voltage portions are not exposed to the outside. Accordingly, there is no high-voltage portions exposed in the cubicle, so that workers are free from the fear of receiving electrical shock when they step into the cubicle and perform cleaning or maintenance and inspection of each unit. Further, lives of the current transformer CT and of the potential transformer PT can be increased by molding them, and deterioration or damage of these transformers to be caused by insects or rats which are sacrificed by electrical shocks can be prevented from occurring.

### (Fourth embodiment)

Fig. 4 shows a schematic constitutional view of a transformer to which the transformer structure according to a fourth embodiment of this invention is applied. The transformer Tr2 of the fourth embodiment is of the same constitution as that of the third embodiment plus that of the second embodiment. More specifically, vents 14b,20a are defined through the cylindrical bodies 14,20, and each lid 38 has a blowing hole 38b and an air blower 42. Accordingly, in the transformer Tr2 of the fourth embodiment, not only accidents that workers are affected by electricity can be prevented from occurring, but also the transformer Tr2 is air-cooled forcibly to control rise in the temperature thereof and prevent drop in the output and reduction of life from occurring.

### (Fifth embodiment)

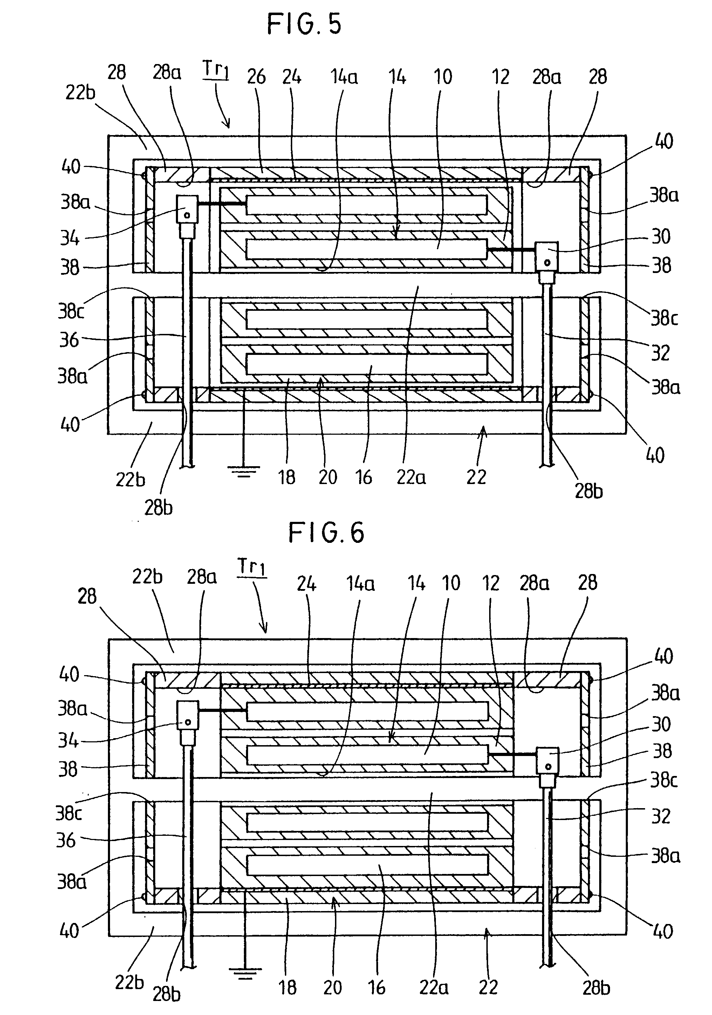

Fig. 5 shows a schematic constitutional view of a transformer to which the transformer structure according to a fifth embodiment of this invention is applied. Since the basic constitution of this transformer is the same as that of the first embodiment, only different parts will be described. That is, in the fifth embodiment, an opening 38c is defined in each lid 38 in alignment with the center bore 14a of the first cylindrical body 14, and the center leg 22a of the iron core 22 inserted into the center bore 14a is extending outward through these openings 38c. Meanwhile, the side legs 22b of the iron core 22 are designed to be located on the external sides of the housing 26 and of the cylindrical members 28. The housing 26 is disposed concentrically around the second cylindrical body 20. In the fifth embodiment, the iron core 22 itself is completely free from the fear of giving electrical shocks to workers even if they touch it to allow them to perform inspection and the like safely. Incidentally, as the constitution of the fifth embodiment, there may be employed one in which coils of a current transformer CT and of a potential transformer PT are disposed adjacent to the primary coil 10 and in no contact with it within the insulating molding material 12 constituting the first cylindrical body 14 to electrically connect these coils to one another based on the principle of electromagnetic induction.

### (Sixth embodiment)

Fig. 6 shows a schematic constitutional view of a transformer to which the transformer structure according to a sixth embodiment of this invention is applied. Since the basic constitution of this transformer is the same as that of the fifth embodiment, only different parts will be described. That is, in the sixth embodiment, the housing 26 to be disposed around the second cylindrical body 20 is omitted, and a metallic shielding member 24 is disposed within the outer layer portion of the insulating molding material 18 present around the secondary coil 16 in the second cylindrical body 20 so as to surround the secondary coil 16. The insulating molding material 18 is designed to have a sufficient thickness at the outer layer portion surrounding the secondary coil 16, and the shielding member 24 is incorporated into that portion of the insulting molding material 18 to be spaced a predetermined distance from the secondary coil 16. Meanwhile, the cylindrical members 28 are attached to both axial ends of the second cylindrical body 20 so that the coils 10,16 can be connected with the cables 32,26 in these cylindrical members 28. In this sixth embodiment, since the housing 26 can be omitted, production cost can be reduced.

### (Seventh embodiment)

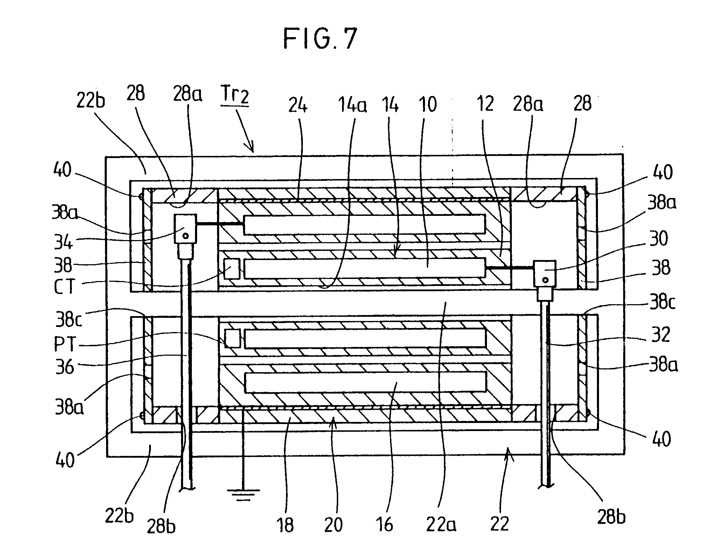

Fig. 7 shows a schematic constitutional view of a transformer to which the transformer structure according to a seventh embodiment of this invention is applied. The basic constitution of this transformer is the same as that of the sixth embodiment, and the difference is that the coils of the current transformer CT and of the potential transformer PT are located adjacent to the primary coil 10 and in no contact therewith within the insulating molding material 12 constituting the first cylindrical body 14 to electrically connect these coils to one another based on the principle of electromagnetic induction.

### (Example)

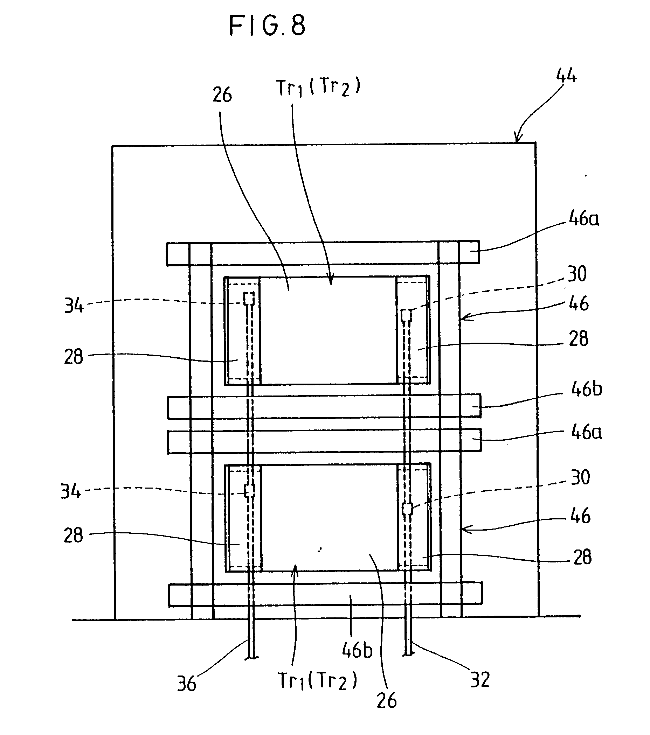

Fig. 8 shows an electric energy transforming equipment in which transformers according to the embodiments of this invention are employed. An electric energy transforming apparatus 48 consisting of two frames 46 each having a transformer Tr1 (or Tr2), which are stacked and connected to each other, is disposed in a cubicle 44. Each frame 46 has a rectangular form, as shown in Fig. 8, and the transformer Tr1 (or Tr2) is adapted to be positioned and fixed between an upper frame member 46a and a lower frame member 46b. The upper frame 46 and the lower frame 46 are connected to each other by fixing the lower frame member 46b of the former to the upper frame member 46a of the latter by bolts (not shown) at several positions.

The transformers Tr1 (or Tr2) are disposed in the frames 46 in such postures that the axes of the primary coils 10 (secondary coil 16) may be horizontal, respectively. A high-voltage cable 32 and a low-voltage cable 36 to be connected to the coils 10,16 of each transformer Tr1 (or Tr2) are designed to be inserted through the bottom of the cubicle 44 and through holes 28b of the respective cylindrical members 28 to be connected to corresponding terminals 30,34. In the thus constituted electric energy transforming apparatus 48, the junctions between the upper and lower transformers Tr1 (or Tr2) with the cables 30,34 are not exposed to the outside, so that accidents that workers receive electrical shocks can be prevented from occurring to permit them to work safely in the cubicle.

### (Variation)

In the transformer structure according to any of the foregoing embodiments, breakers to be connected to the transformers may be disposed within the cylindrical members. Meanwhile, AVR (automatic voltage regulators), LRD, WW, etc. may be disposed within the cylindrical members. Further, in the transformer structure according to any of the foregoing embodiments, since the high-voltage portions can be hidden entirely, it is possible to omit the cubicle and to install the transformer as such directly at a desired place. Incidentally, the cylindrical members may be formed integrally with the housing.

Meanwhile, in the second to seventh embodiments, a vibration-proofing material or a sound-proofing material may be disposed around the first cylindrical body and/or the second cylindrical body in the same manner as in the first embodiment to prevent the transformer from vibrating, as well as, to control generation of noises.

Further, in the fourth embodiment, it is possible to omit one of the air blowers to be attached to the lids and also to define a plurality of vents in the shielding member and the housing, like in the second embodiment. Furthermore, in the fifth to seventh embodiments, it is also possible to employ a constitution in which air blowers are attached at predetermined positions of the lids and vents are defined radially in the first and second cylindrical bodies so as to distribute the outside air into the transformer and air-cool it.

It should be apparent to those skilled in the art that the present invention may be embodied in many other specific forms without departing from the spirit or scope of the invention. Therefore, the present examples and embodiments are to be considered as illustrative and not restrictive, and the invention is not to be limited to the details given herein, but may be modified within the scope of the appended claims.

## Claims

1. A transformer structure which is of a blocked transformer (Tr1) formed by coating coils (10,16) in a power distribution transformer (Tr1) with an insulating molding material (12,18), for example, a synthetic resin such as epoxy or a synthetic rubber such as butyl rubber to a predetermined thickness:
comprising a housing (26) made of an insulating material lined with a metallic shielding member (24) disposed to surround the outermost layer portion of said insulating molding material (18); said shielding member (24) being grounded.

2. A transformer structure which is of an integrated transformer (Tr2) serving as a power receiving and transforming equipment formed by disposing coils of a current transformer (CT) and of a potential transformer (PT) adjacent to coils (10,16) of a power distribution transformer (Tr2) to be electrically connected to one another based on the principle of electromagnetic induction and by charging an insulating molding material (12,18), for example, a synthetic resin such as epoxy or a synthetic rubber such as butyl rubber around said coils (10,16) in said distribution transformer (Tr2) and those of said current transformer (CT) and of said potential transformer (PT) to integrate these coils into one block;
comprising a housing (26) made of an insulating material lined with a metallic shielding member (24) disposed to surround the outermost layer portion of said insulating molding material (18), said shielding member (24) being grounded.

3. A transformer structure which is of a blocked transformer (Tr1) formed by coating coils (10,16) in a power distribution transformer (Tr1) with an insulating molding material (12,18), for example, a synthetic resin such as epoxy or a synthetic rubber such as butyl rubber to a predetermined thickness;
comprising a metallic shielding member (24) disposed to surround the outermost coil (16) in the outer layer portion of said insulating molding material (18) present around said coil (16), said shielding member (24) being grounded.

4. A transformer structure which is of an integrated transformer (Tr2) serving as a power receiving and transforming equipment formed by disposing coils of a current transformer (CT) and of a potential transformer (PT) adjacent to coils (10,16) of a power distribution transformer (Tr2) to be electrically connected to one another based on the principle of electromagnetic induction and by charging an insulating molding material (12,18), for example, a synthetic resin such as epoxy or a synthetic rubber such as butyl rubber around said coils (10,16) in said distribution transformer (Tr2) and those of said current transformer (CT) and of said potential transformer (PT) to integrate these coils into one block;
comprising a metallic shielding member (24) disposed to surround the outermost coil (16) in the outer layer portion of said insulating molding material (18) present around said coil (16), said shielding member (24) being grounded.

5. A transformer structure according to any of Claims 1 to 4,
wherein a cylindrical member (28), which is made of an insulating material and has an axially opening center bore (28a), is formed at each axial end of said coils (10,16) in said power distribution transformer (Tr1,Tr2);
terminals (30,34) led out of said coils (10,16) of said power distribution transformer (Tr2) are disposed in said center bores (28a) of said cylindrical members (28); and
cables (32,36) are introduced through through holes (28b) defined radially in said cylindrical members (28) into said center bores (28a) and are connected to said terminals (30,34).

6. A transformer structure according to any of Claims 1 to 5, wherein a lid (38) made of an insulating material is detachably attached to each open end of each cylindrical member (28).
